# EUROPÄISCHE PATENTSCHRIFT

(11) **EP 3 406 501 B1**
(45) Veröffentlichungstag und Bekanntmachung des Hinweises auf die Patenterteilung: **09.09.2020**
(21) Anmeldenummer: 18172654.8
(22) Anmeldetag: 16.05.2018
(51) Int. Cl.: B61F 1/00, B61D 17/10, B60R 16/02, H02G 3/04, H02G 3/34

(54) **FAHRZEUG MIT MINDESTENS EINER KANALVORRICHTUNG UND VERFAHREN ZUM AUSRÜSTEN EINES FAHRZEUGS MIT EINER KANALVORRICHTUNG**
VEHICLE WITH AT LEAST ONE CHANNEL DEVICE AND METHOD OF PROVIDING A VEHICLE WITH A CHANNEL DEVICE
VÉHICULE POURVU D'AU MOINS UN DISPOSITIF DE CANAL ET PROCÉDÉ PERMETTANT D'ÉQUIPER UN VÉHICULE D'UN DISPOSITIF DE CANAL

(30) Priorität: 26.05.2017 DE 102017111525
(43) Veröffentlichungstag der Anmeldung: 28.11.2018
(73) Patentinhaber: Bombardier Transportation GmbH, 10785 Berlin (DE)
(72) Erfinder: Stark, Torsten, 02923 Kodersdorf (DE)
(74) Vertreter: Zimmermann & Partner Patentanwälte mbB

(56) Entgegenhaltungen:
- EP-A1- 2 322 830
- EP-A2- 1 767 426
- CN-U- 202 260 296

## Beschreibung

Die Erfindung betrifft Fahrzeug mit mindestens einer Kanalvorrichtung und ein Verfahren zum Ausrüsten eines Fahrzeugs mit einer Kanalvorrichtung.

Es ist bekannt, dass ein Hochspannungskabel bei einem Fahrzeug in einem Teilabschnitt in einer Längsrichtung des Fahrzeugs verlegt wird. Dabei verläuft das Hochspannungskabel entlang eines Unterflurbereichs eines Fahrzeugs und ist an diesem befestigt. Insbesondere bei einem Schienenfahrzeug wird das Hochspannungskabel in einem Rohr am Unterflurbereich geführt. Bei einer Montage muss das Hochspannungskabel daher in das Rohr eingefädelt werden, wodurch ein erhöhter Zeitaufwand entsteht.

Die Druckschrift WO2011/114801 A1 beschreibt ein Fahrzeug mit einem Bündel von Hochspannungsleitungen, das in einem Rohr mit einem halbkreisförmigen Querschnitt geführt ist. Das Rohr weist Flanschabschnitte auf, die mittels Befestigungselementen an einem Fahrzeugboden befestigt sind. Innerhalb des Rohres kann eine Feder angeordnet sein, die die Hochspannungsleitungen gegen eine Wand des Rohres drückt. Nachteilig ist hier, dass für eine Führung der Hochspannungsleitungen und eine Federwirkung verschiedene Bauteile benötigt werden, wodurch der Fertigungs- und Montageaufwand erhöht ist. Außerdem ist die Feder nachgiebig, so dass eine Positionierungssicherheit gering ist.

Die Druckschrift EP1767426 A2 beschreibt ein Fahrzeug mit zumindest einer Leitung, die sich in einem Leitungskanal, der unterhalb des Wagenkastens des Fahrzeugs angeordnet ist, von einem Ende des Fahrzeugs zum anderen Ende des Fahrzeugs erstreckt.

Die Druckschrift CN 201758266 U offenbart einen V-förmigen Kanal zur Abdeckung eines elektrischen Kabels. An dem Kanal sind abgewinkelte Seitenabschnitte mit Bohrungen vorhanden und mittels Befestigungselementen an einem Boden befestigt. Der Kanal schützt das elektrische Kabel und verhindert Arbeitsunfälle, wie z.B. Stolperunfälle. Ein Nachteil besteht darin, dass der Kanal nur für statische Anordnungen verwendet werden kann, denn es fehlt eine Einrichtung, die das Kabel bei dynamischen Belastungen, wie z.B. Vibrationen, in Position halten könnte.

Die Druckschrift RU161654 U1 betrifft eine Kabelschelle für ein oder mehrere elektrische Leitungen, die Kabel oder Kabelbündel mit unterschiedlichen Querschnittsabmessungen aufnehmen kann und mittels Schrauben an einer Unterlage befestigt ist. Ein Nachteil besteht darin, dass die Kabelschelle das Kabel oder Kabelbündel nur an einzelnen Stellen fixieren kann. Zwischen diesen Stellen fehlen eine Führung und ein Schutz des Kabels oder Kabelbündels.

Der Erfindung liegt daher die Aufgabe zu Grunde, ein Fahrzeug und ein Verfahren zu schaffen, bei dem eine elektrische Leitung einfach und schnell montiert werden kann und im Betrieb sicher positioniert, geschützt und geführt wird.

Diese Aufgabe wird erfindungsgemäß mit einem Fahrzeug mit mindestens einer Kanalvorrichtung nach Anspruch 1 gelöst. Weiterhin wird die Aufgabe mit einem Verfahren zum Ausrüsten eines Fahrzeugs mit einer Kanalvorrichtung nach Anspruch 14 gelöst. Vorteilhafte Ausgestaltungen der Erfindung sind in den Unteransprüchen enthalten.

Erfindungsgemäß besteht die Lösung der Aufgabe in einem Fahrzeug mit mindestens einer Kanalvorrichtung, in der eine einzige elektrische Leitung geführt ist, wobei das Fahrzeug eine Unterbodenvorrichtung mit mindestens einem geradlinigen Bereich und mindestens einem Umlenkbereich aufweist und die Kanalvorrichtung mindestens ein Kanalelement und mindestens ein Befestigungselement umfasst, wobei das Kanalelement mittels des Befestigungselements an dem geradlinigen Bereich der Unterbodenvorrichtung befestigt ist. Das Kanalelement ist von dem geradlinigen Bereich der Unterbodenvorrichtung beabstandet, und die elektrische Leitung ragt radial aus einem Öffnungsbereich des Kanalelements heraus.

Ein Vorteil des erfindungsgemäßen Fahrzeugs besteht darin, dass mittels des Kanalelements und des Befestigungselements eine Klemmwirkung auf die elektrische Leitung ausgeübt wird, so dass diese sicher positioniert ist. Die elektrische Leitung kann in dem mindestens einen Kanalelement einfach und schnell vormontiert werden. Ein Einfädeln in ein Rohr, wie aus dem Stand der Technik bekannt, entfällt. Das Kanalelement schützt und führt die elektrische Leitung entlang des geradlinigen Bereichs des Unterbodens. Das Kanalelement entspricht einem in einer Längsrichtung offenen Kabelkanal mit einer Länge die größer als eine Breite des Kabelkanals bzw. des Kanalelements ist. Ein geradliniger Bereich ist ein Bereich, in dem die elektrische Leitung geradlinig geführt wird. Die elektrische Leitung wird innerhalb eines Toleranzbereichs geradlinig geführt und weicht von einem geradlinigen Verlauf im rein mathematischen Sinn ab.

In einer vorteilhaften Ausgestaltung der Erfindung bildet das Kanalelement zusammen mit dem geradlinigen Bereich der Unterbodenvorrichtung eine Dreipunktaufnahme für die elektrische Leitung aus. Die Dreipunktaufnahme ermöglicht eine Klemmwirkung mit Hilfe einer einfachen Bauweise und Geometrie.

Speziell kann die elektrische Leitung an einer ersten Stelle und an einer zweiten Stelle an dem Kanalelement anliegen und an einer dritten Stelle an dem geradlinigen Bereich der Unterbodenvorrichtung anliegen. Die erste Stelle, die zweite Stelle und die dritte Stelle eignen sich besonders zur Ausbildung einer Dreipunktaufnahme.

In einer zweckmäßigen Ausgestaltung der Erfindung weist das Kanalelement mindestens einen ersten V-förmigen Bereich auf. Der V-förmige Bereich bildet eine stabile Querschnittsform und ermöglicht eine Entwässerung des Kanalelements. Zudem trägt der V-förmige Bereich zu einer stabilen Dreipunktaufnahme bei.

Insbesondere kann das Kanalelement zwei parallele Abschnitte aufweisen, die sich an den ersten V-förmigen Bereich anschließen. Eine derartige Geometrie des Kanalelements ermöglicht eine gute Führung der elektrischen Leitung.

Weiterhin kann das Kanalelement zwei nach innen geneigte Abschnitte aufweisen, die sich an die parallelen Abschnitte anschließen. Dadurch wird eine Federwirkung gegenüber der elektrischen Leitung erzielt, die die elektrische Leitung in Position hält.

Zweckmäßig ist der Öffnungsbereich schmaler als ein Durchmesser der elektrischen Leitung. Dadurch kann bei der Montage verhindert werden, dass die elektrische Leitung aus dem Kanalelement herausfällt.

Außerdem können Kanten entlang des Öffnungsbereichs des Kanalelements jeweils eine Bördelung aufweisen und/oder mindestens ein Ende des Kanalelements in mindestens ein Kantenschutzelement aufweisen. Die Bördelung und das Kantenschutzelement verhindern bei der Montage, dass Kanten des Kanalelements an der elektrischen Leitung kratzen oder bei Personen Verletzungen verursachen.

In einer weiteren Ausgestaltung der Erfindung sind das Kanalelement und das Befestigungselement separate Bauteile und/oder ist eine Länge des Kanalelements größer als eine Breite des Kanalelements. Dadurch verringert sich der Fertigungsaufwand und das Kanalelement und das Befestigungselement sind flexibel montierbar. Durch das Verhältnis von Länge und Breite des Kanalelements ist sichergestellt, dass die elektrische Leitung eine Führung erhält.

Vorzugsweise weist das Befestigungselement einen zweiten V-förmigen Bereich auf und liegt von außen an dem ersten V-förmigen Bereich des Kanalelements an und/oder das Befestigungselement ist entlang des Kanalelements verschiebbar. Ein V-förmiger Formschluss verbessert die Klemmwirkung auf die elektrische Leitung. Das Befestigungselement kann entlang des Kanalelements an einer beliebigen Stelle montiert werden

In einer weiteren Ausgestaltung der Erfindung umfasst die Kanalvorrichtung in dem Umlenkbereich mindestens ein Umlenkelement, das die elektrische Leitung zusammen mit dem Umlenkbereich umschließt und/oder das Kanalelement teilweise überdeckt. Das Umlenkelement gewährleistet einen Schutz der elektrischen Leitung in Bereichen, die einer hohen mechanischen Belastung ausgesetzt sind, z.B. in einem Bereich von Rädern des Fahrzeugs, die loses Material von einer Fahrstrecke aufwirbeln. Das Umlenkelement überdeckt das Kanalelement teilweise und ermöglicht dadurch einen Ausgleich von Fertigungs- und Montagetoleranzen.

Insbesondere kann das Umlenkelement mindestens einen Winkel, vorzugsweise zwei 90°-Winkel einschließlich jeweils eines Toleranzbereichs, aufweisen und an dem Umlenkbereich befestigt sein. Dadurch weist das abgewinkelte Element eine einfache und stabile Geometrie auf und ist leicht herzustellen.

Insbesondere kann das Fahrzeug ein Schienenfahrzeug sein. Bei Schienenfahrzeugen ist die Erfindung besonders vorteilhaft, da die elektrische Leitung eine große Länge aufweist und eine Vormontage erhebliche Zeiteinsparungen bewirkt.

Weiterhin besteht die Lösung der Aufgabe in einem Verfahren zum Ausrüsten eines Fahrzeugs mit der Kanalvorrichtung. Die elektrische Leitung wird in mindestens ein Kanalelement eingesetzt und anschließend das Kanalelement mittels des Befestigungselements in mindestens einem geradlinigen Bereich an der Unterbodenvorrichtung befestigt, wobei die elektrische Leitung zwischen dem Kanalelement und dem geradlinigen Bereich der Unterbodenvorrichtung eingeklemmt wird. Durch dieses Verfahren wird eine einfache Montage bzw. Vormontage ermöglicht und die elektrische Leitung sicher positioniert.

Außerdem kann nach dem Befestigen des Kanalelements das mindestens eine Umlenkelement an dem mindestens einen Umlenkbereich der Unterbodenvorrichtung befestigt werden. Dadurch wird die elektrische Leitung auch in den Umlenkbereichen geschützt.

Im Folgenden wird ein Ausführungsbeispiel der Erfindung anhand von sechs Figuren näher erläutert. Es zeigen:
- Fig. 1: eine schematische perspektivische Ansicht eines erfindungsgemäßen Fahrzeugs,
- Fig. 2: einen schematischen perspektivischen Ausschnitt A aus einer Unterbodenvorrichtung des Fahrzeugs in Fig. 1,
- Fig. 3: eine schematische Querschnittsansicht einer Kanalvorrichtung entlang der Linie B-B in Fig. 2,
- Fig. 4: eine schematische perspektivische Ansicht der Kanalvorrichtung, ausgehend von der Querschnittsansicht in Fig. 3,
- Fig. 5: einen schematischen Längsschnitt der Kanalvorrichtung an einem Ausschnitt C in Fig. 2 und
- Fig. 6.: eine schematische Querschnittsansicht der Kanalvorrichtung entlang der Linie D-D in Fig. 2.

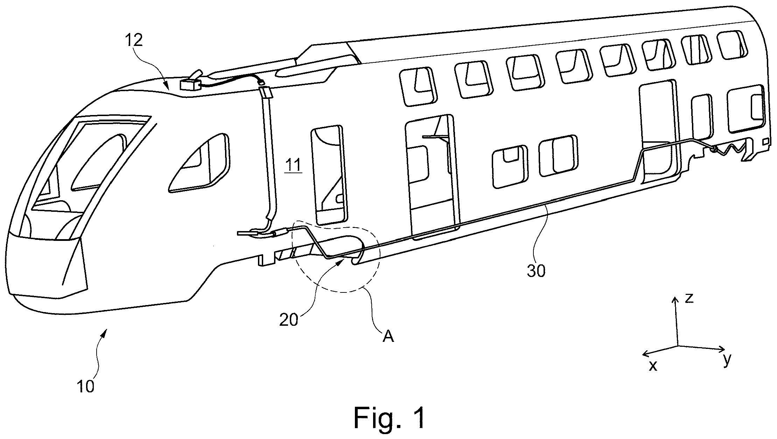

Fig. 1 zeigt schematisch ein erfindungsgemäßes Fahrzeug 10, das hier einem Schienenfahrzeug entspricht, mit einer elektrischen Leitung 30, die hier einem Hochspannungskabel entspricht. Die elektrische Leitung 30 verläuft, ausgehend von einem Dachbereich 12, durch einen Innenbereich 11 hindurch und anschließend entlang einer Unterbodenvorrichtung 20.

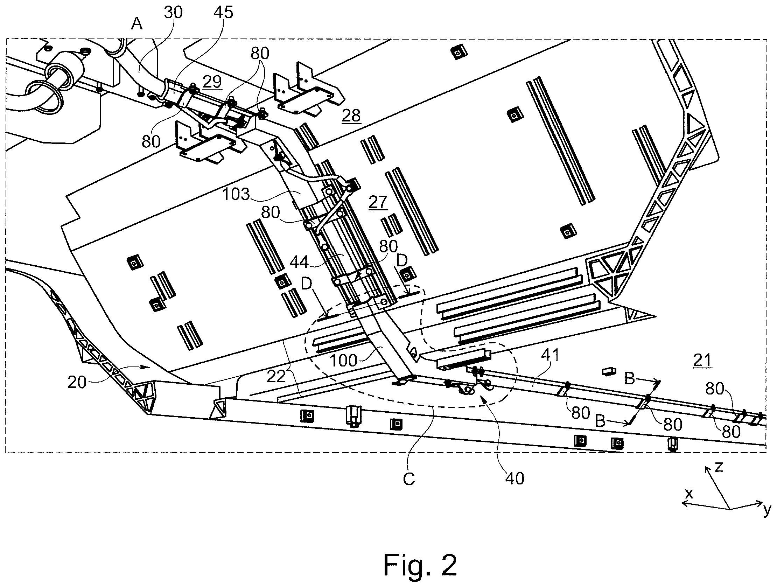

Im Dachbereich 12 ist die elektrische Leitung 30 ungeschützt mit hier nicht dargestellten Blockschellen verlegt. Im Innenbereich 11 ist die elektrische Leitung 30 vollständig metallisch eingehaust und mit ebenfalls nicht dargestellten Blockschellen befestigt. An der Unterbodenvorrichtung 20 verläuft die elektrische Leitung 30 innerhalb einer in den Fig. 2 bis 6 dargestellten Kanalvorrichtung 40 die an der Unterbodenvorrichtung 20 befestigt ist. Eine Längsrichtung x, eine Querrichtung y und eine senkrechte Richtung z kennzeichnen in den Fig. 1 bis 5 Bezugsrichtungen des Fahrzeugs 10.

In Fig. 2 ist ein perspektivischer Ausschnitt A aus der Unterbodenvorrichtung 20 des Fahrzeugs 10 in Fig. 1 schematisch dargestellt. Die Unterbodenvorrichtung 20 weist hier beispielhaft drei geradlinige Bereiche 21, 27 und 29 auf. Die geradlinigen Bereiche 21, 27 und 29 sind Bereiche, in denen die elektrische Leitung 30 geradlinig geführt wird. Die elektrische Leitung 30 wird innerhalb eines Toleranzbereichs geradlinig geführt und weicht von einem geradlinigen Verlauf im rein mathematischen Sinn ab. Außerdem umfasst die Unterbodenvorrichtung 20 zwei Umlenkbereiche 22 und 28, in denen die elektrische Leitung 30 bogenförmig geführt wird.

An der Unterbodenvorrichtung 20 ist eine Kanalvorrichtung 40 angeordnet. Die Kanalvorrichtung 40 umfasst ein Kanalelement 41 in einem geradlinigen Bereich 21, ein Umlenkelement 100 in einem Umlenkbereich 22, ein Kanalelement 44 in einem geradlinigen Bereich 27, ein Umlenkelement 103 in einem Umlenkbereich 28 und ein Kanalelement 45 in einem geradlinigen Bereich 29. Die Kanalelemente 41, 44 und 45 sind mit Befestigungselementen 80 an der Unterbodenvorrichtung 20 befestigt. Entlang der Unterbodenvorrichtung 20 befinden sich weitere nicht dargestellte geradlinige Bereiche mit nicht dargestellten Kanalelementen und weitere nicht dargestellte Umlenkbereiche mit nicht dargestellten Umlenkelementen, die jeweils ebenfalls Teile der Kanalvorrichtung 40 sind.

Im Folgenden wird das Kanalelement 41 beschrieben, das im Aufbau den Kanalelementen 44 und 45 sowie allen nicht dargestellten Kanalelementen entspricht. Die Kanalelemente 41, 44 und 45 weisen unterschiedliche Längen auf. Die nicht dargestellten Kanalelemente können ebenfalls unterschiedliche Längen aufweisen.

Ebenso wird im Folgenden das Umlenkelement 100 beschrieben, das im Querschnitt dem Umlenkelement 103 und allen nicht dargestellten Umlenkelementen entspricht. Innerhalb des Umlenkelements 100 ist die elektrische Leitung 30 in Bezug auf die Querrichtung y im Uhrzeigersinn gekrümmt. Innerhalb des Umlenkelements 103 ist die elektrische Leitung 30 in Bezug auf die Querrichtung y entgegen dem Uhrzeigersinn gekrümmt. Die nicht dargestellten Umlenkelemente können in Bezug auf die Querrichtung y im Uhrzeigersinn oder entgegen dem Uhrzeigersinn gekrümmt sein, je nach Verlauf der Unterbodenvorrichtung 20.

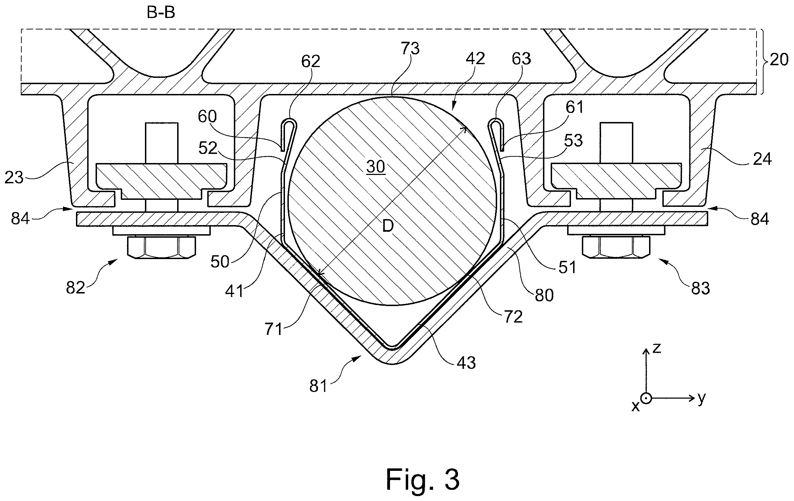

In Fig. 3 ist das Kanalelement 41 in der Schnittebene B-B in Fig. 2 im Detail dargestellt. In dem Kanalelement 41 ist die elektrische Leitung 30 angeordnet. Das Kanalelement 41 ist mittels eines Befestigungselements 80 und Schraubenverbindungen 82 und 83 an Schienen 23 und 24 der Unterbodenvorrichtung 20 befestigt. Die Schienen 23 und 24 sind hier C-Schienen, können jedoch auch anders ausgeführt sein. Das Kanalelement 41 ist mit mindestens einem weiteren Befestigungselement 80 an den Schienen 23 und 24 oder an anderen Schienen der Unterbodenvorrichtung 20 befestigt.

Das Kanalelement 41 weist einen Öffnungsbereich 42 auf, aus dem die elektrische Leitung 30 in der senkrechten Richtung z herausragt. Der Öffnungsbereich 42 ist schmaler ist als ein Durchmesser D der elektrischen Leitung 30. Das Kanalelement 41 weist einen ersten V-förmigen Bereich 43 auf, in dem die elektrische Leitung 30 an einer ersten Stelle 71 und einer zweiten Stelle 72 aufliegt. An einer dritten Stelle 73 trifft die elektrische Leitung 30 auf die Unterbodenvorrichtung 20. Die erste, zweite und dritte Stelle 71, 72 und 73 bilden zusammen eine Dreipunktaufnahme für die elektrische Leitung 30.

In der senkrechten Richtung z schließen sich parallele Abschnitte 50 und 51 an den V-förmigen Bereich 43 an. An die parallelen Abschnitte 50 und 51 schließen sich nach innen geneigte Abschnitte 52 und 53 an. Die geneigten Abschnitte 52 und 53 gehen in Bördelungen 62 und 63 an Kanten 60 und 61 des Kanalelements 41 über.

Das Befestigungselement 80 weist einen zweiten V-Förmigen Bereich 81 auf, der von außen an dem ersten V-förmigen Bereich 43 des Kanalelements 41 anliegt. Zwischen dem Befestigungselement 80 und den Schienen 23 und 24 befindet sich jeweils ein Luftspalt 84.

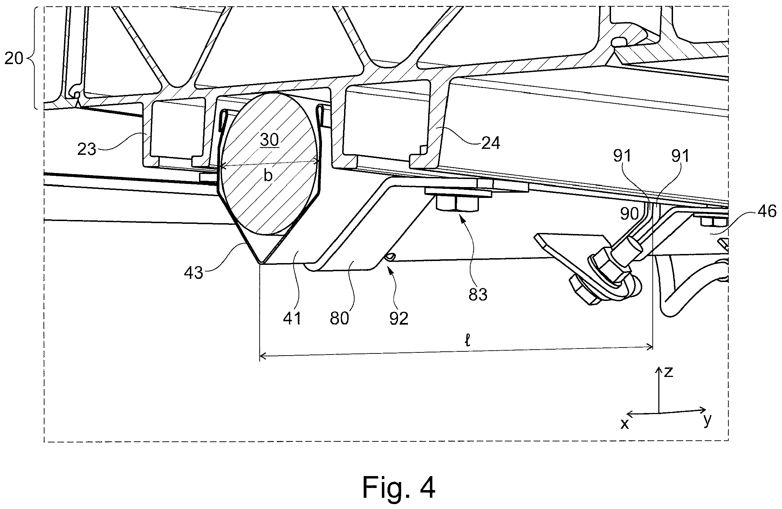

In Fig. 4 ist, ausgehend von der Schnittansicht in Fig. 3, eine perspektivische Ansicht des Kanalelements 41 mit der elektrischen Leitung 30 und des Befestigungselements 80 dargestellt. Wie bereits in Fig. 3 gezeigt, ist das Befestigungselement 80 mittels Schraubenverbindungen 82 (nicht sichtbar) und 83 an Schienen 23 und 24 der Unterbodenvorrichtung 20 befestigt.

Eine Länge I des Kanalelements 41, die auch länger oder kürzer sein kann als in Fig. 4, ist größer als eine Breite b des Kanalelements 41.

An einem Ende 90 des Kanalelements 41 ist ein Kantenschutzelement 91 angebracht. An einem angrenzenden Kanalelement 46 ist ebenfalls ein Kantenschutzelement 91 angeordnet. Weitere nicht dargestellte Kantenschutzelemente 91 sind an jedem Ende der Kanalelemente 44 und 45 sowie an Enden von nicht dargestellten Kanalelementen angeordnet.

An dem ersten V-förmigen Bereich 43 befindet sich mindestens eine Entwässerungsbohrung 92. Auch das Kanalelement 46 kann mindestens eine Entwässerungsbohrung 92 aufweisen. Weitere Entwässerungsbohrungen 92 können auch an anderen, nicht dargestellten Kanalelementen vorhanden sein.

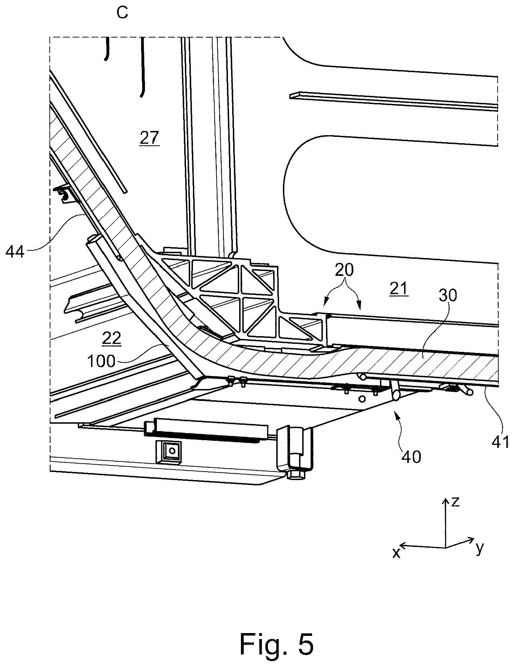

Fig. 5 stellt ein Umlenkelement 100 mit der darin geführten elektrischen Leitung 30 in einem Ausschnitt C in Fig. 2 und als Schnittansicht entlang der Längsrichtung x dar. Von der Kanalvorrichtung 40 sind nur die Kanalelemente 41 und 44 sowie das Umlenkelement 100 zu sehen. Das Kanalelement 41 verläuft entlang des geradlinigen Bereichs 21, das Umlenkelement 100 verläuft entlang des Umlenkbereichs 22 und das Kanalelement 44 verläuft entlang des geradlinigen Bereichs 27, wie in Bezug auf Fig. 2 bereits erläutert.

Die Kanalelemente 41 und 44 sowie das Umlenkelement 100 sind an der Unterbodenvorrichtung 20 befestigt. Innerhalb des Umlenkelements 100 und innerhalb von weiteren Umlenkelementen ist die elektrische Leitung 30 weniger eng geführt als in den Kanalelementen 41 und 44 sowie in weiteren Kanalelementen. Die Umlenkeinrichtung 100 überdeckt jeweils einen Teil des Kanalelements 41 und des Kanalelements 44. Das Umlenkelement 100 sowie weitere Umlenkelemente können jeweils mindestens eine, in den Figuren nicht dargestellte, Entwässerungsbohrung aufweisen.

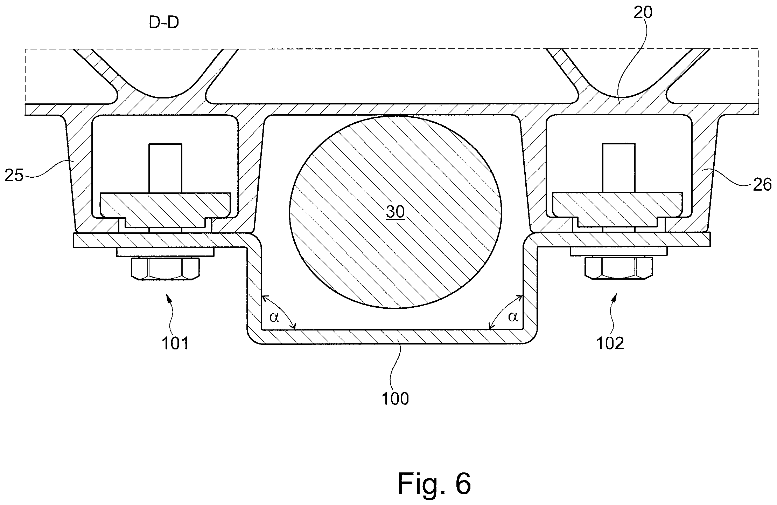

In Fig. 6 ist ein Schnitt durch das Umlenkelement 100 entlang der Linie D-D in Fig. 2 dargestellt. Das Umlenkelement 100 und das Kanalelement 44 (vgl. Fig. 2) können sich beliebig weit überlappen. Das Kanalelement 44 ist in der vereinfachten, schematischen Fig. 6 nicht dargestellt.

Das Umlenkelement 100 ist analog zum Kanalelement 41 mittels Schraubenverbindungen 101 und 102 an Schienen 25 und 26 der Unterbodenvorrichtung 20 befestigt. Die Schienen 25 und 26 sind hier C-Schienen, können jedoch auch anders ausgeführt sein. Das Umlenkelement 100 ist mit mindestens zwei weiteren Schraubenverbindungen 101 und 102 an den Schienen 25 und 26 oder an anderen Schienen an der Unterbodenvorrichtung 20 befestigt.

Das Umlenkelement 100 bildet eine zur elektrischen Leitung 30 hin offene Rechteckform aus. Die Rechteckform wird durch zwei gleiche Winkel α definiert, die hier 90° einschließlich eines Toleranzbereichs betragen. Die Winkel α können jedoch auch größer als 90° sein. Dann weist das Umlenkelement 100 eine zur elektrischen Leitung 30 hin offene Trapezform auf. Das Umlenkelement 100 kann auch analog zum Kanalelement 41 eine zur elektrischen Leitung 30 hin offene Dreiecksform bzw. V-Form aufweisen. Alternativ kann das Umlenkelement 100 auch eine zur elektrischen Leitung 30 hin offene Bogenform, z.B. eine Kreisbogenform, aufweisen.

Bei der Montage bzw. beim Ausrüsten des Fahrzeugs 10 wird die elektrische Leitung 30 mittels des Befestigungselements 80 und der Schraubenverbindungen 82 und 83 zwischen dem ersten V-förmigen Bereich 43 des Kanalelements 41 und der Unterbodenvorrichtung 20 eingeklemmt. Die Dreipunktaufnahme ermöglicht einen Ausgleich von Durchmesserschwankungen an der elektrischen Leitung 30 innerhalb eines Toleranzbereichs. Der V-förmige Bereich bewirkt außerdem eine Versteifung des Kanalelements 41 und begünstigt eine Entwässerung.

Die parallelen Abschnitte 50 und 51 führen die elektrische Leitung 30 seitlich. Die geneigten Abschnitte 52 und 53 ermöglichen die Bördelungen 62 und 63, wodurch die elektrische Leitung 30 vor Beschädigungen durch die Kanten 60 und 61 geschützt ist. Die geneigten Abschnitte 52 und 53 ermöglichen außerdem ein Vormontieren der elektrischen Leitung 30 im Kanalelement 41. Durch eine Federwirkung der geneigten Abschnitte 52 und 53 wird die elektrische Leitung 30 an einem Herausfallen aus dem Kanalelement 41 gehindert.

Aufgrund einer Konfektionierung können Enden der elektrischen Leitung 30 einen Durchmesser aufweisen, der größer ist als der Durchmesser D der elektrischen Leitung 30. Die Abmessungen des Kanalelements 41 richten sich jedoch nach dem Durchmesser D der elektrischen Leitung 30. Die Enden der elektrischen Leitung 30 liegen daher außerhalb des Kanalelements 41.

Die Entwässerungsbohrung 92 dient zur Ableitung von Wasser, das im Betrieb in das Kanalelement 41 eintreten kann. Auch aus dem Umlenkelement 100 kann Wasser mittels nicht dargestellter Entwässerungsbohrungen abgeleitet werden. Das Kanalelement 41 und das Umlenkelement 100 sind geerdet. Die Kantenschutzelemente 91 dienen zum Schutz vor Verletzungen bei Montagearbeiten und zum Schutz von Endkanten des Kanalelements 41 vor Beschädigungen.

Der zweite V-förmige Bereich 81 des Befestigungselements 80 versteift den ersten V-förmigen Bereich 43 des Kanalelements 41. Das Befestigungselement 80 ist in der Längsrichtung x gegenüber dem Kanalelement 41 entlang der Schienen 23 und 24 verschiebbar, je nach Einbauverhältnissen an der Unterbodenvorrichtung 20. Die definierten Luftspalte 84 gewährleisten einen sicheren Anzug der Schraubenverbindungen 82 und 83.

Das Umlenkelement 100 dient bei einem Schienenfahrzeug als Steinschlagschutz für gekrümmte Abschnitte der elektrischen Leitung 30 in Bereichen von hier nicht dargestellten Drehgestellen.

Die Kanalvorrichtung 40 erfüllt die entsprechenden technischen Normen bei Schienenfahrzeuggen. Das Kanalelement 41, Das Befestigungselement 80 und das Umlenkelement 100 kommen mit geringen Wandstärken aus, wodurch das jeweils zugehörige Gewicht ebenfalls gering ist.

### Bezugszeichenliste

- 10: Fahrzeug
- 11: Innenbereich
- 12: Dachbereich
- 20: Unterbodenvorrichtung
- 21: Geradliniger Bereich
- 22: Umlenkbereich
- 23: Schiene
- 24: Schiene
- 25: Schiene
- 26: Schiene
- 27: Geradliniger Bereich
- 28: Umlenkbereich
- 29: Geradliniger Bereich
- 30: Elektrische Leitung
- 40: Kanalvorrichtung
- 41: Kanalelement
- 42: Öffnungsbereich
- 43: Erster V-förmiger Bereich
- 44: Kanalelement
- 45: Kanalelement
- 46: Kanalelement
- 50: Paralleler Abschnitt
- 51: Paralleler Abschnitt
- 52: Geneigter Abschnitt
- 53: Geneigter Abschnitt
- 60: Kante
- 61: Kante
- 62: Bördelung
- 63: Bördelung
- 71: Erste Stelle
- 72: Zweite Stelle
- 73: Dritte Stelle
- 80: Befestigungselement
- 81: Zweiter V-förmiger Bereich
- 82: Schraubenverbindung
- 83: Schraubenverbindung
- 84: Luftspalt
- 90: Ende
- 91: Kantenschutzelement
- 92: Entwässerungsbohrung
- 100: Umlenkelement
- 101: Schraubenverbindung
- 102: Schraubenverbindung
- 103: Umlenkelement

- D: Durchmesser
- l: Länge
- b: Breite
- x: Längsrichtung
- y: Querrichtung
- z: Senkrechte Richtung
- α: Winkel

## Patentansprüche

1. Fahrzeug (10) mit mindestens einer Kanalvorrichtung (40),
- in der eine einzige elektrische Leitung (30) geführt ist, wobei
- das Fahrzeug (10) eine Unterbodenvorrichtung (20) mit mindestens einem geradlinigen Bereich (21) und mindestens einem Umlenkbereich (22) aufweist und
- die Kanalvorrichtung (40) mindestens ein Kanalelement (41) und mindestens ein Befestigungselement (80) umfasst, wobei
- das Kanalelement (41) mittels des Befestigungselements (80) an dem geradlinigen Bereich (21) der Unterbodenvorrichtung (20) befestigt ist,
- das Kanalelement (41) von dem geradlinigen Bereich (21) der Unterbodenvorrichtung (20) beabstandet ist und
**dadurch gekennzeichnet, dass**
- die elektrische Leitung (30) radial aus einem Öffnungsbereich (42) des Kanalelements (41) herausragt und
- mittels des Kanalelements (41) und des Befestigungselements (80) eine Klemmwirkung auf die elektrische Leitung (30) ausgeübt wird.

2. Fahrzeug (10) nach Anspruch 1, **dadurch gekennzeichnet, dass** das Kanalelement (41) zusammen mit dem geradlinigen Bereich (21) der Unterbodenvorrichtung (20) eine Dreipunktaufnahme für die elektrische Leitung (30) ausbildet.

3. Fahrzeug (10) nach Anspruch 2, **dadurch gekennzeichnet, dass** die elektrische Leitung (30) an einer ersten Stelle (71) und an einer zweiten Stelle (72) an dem Kanalelement (41) anliegt und an einer dritten Stelle (73) an dem geradlinigen Bereich (21) der Unterbodenvorrichtung (20) anliegt.

4. Fahrzeug (10) nach einem der Ansprüche 1 bis 3, **dadurch gekennzeichnet, dass** das Kanalelement (41) mindestens einen ersten V-förmigen Bereich (43) aufweist.

5. Fahrzeug (10) nach Anspruch 4, **dadurch gekennzeichnet, dass** das Kanalelement (41) zwei parallele Abschnitte (50, 51) aufweist, die sich an den ersten V-förmigen Bereich (42) anschließen.

6. Fahrzeug (10) nach Anspruch 5, **dadurch gekennzeichnet, dass** das Kanalelement (41) zwei nach innen geneigte Abschnitte (52, 53) aufweist, die sich an die parallelen Abschnitte (50, 51) anschließen.

7. Fahrzeug (10) nach Anspruch 6, **dadurch gekennzeichnet, dass** der Öffnungsbereich (42) schmaler ist als ein Durchmesser (D) der elektrischen Leitung (30).

8. Fahrzeug (10) nach einem der vorhergehenden Ansprüche, **dadurch gekennzeichnet, dass** Kanten (60, 61) entlang des Öffnungsbereichs (42) des Kanalelements (41) jeweils eine Bördelung (62, 63) aufweisen und/oder dass mindestens ein Ende (90) des Kanalelements (41) mindestens ein Kantenschutzelement (91) aufweist.

9. Fahrzeug (10) nach einem der vorhergehenden Ansprüche, **dadurch gekennzeichnet, dass** das Kanalelement (41) und das Befestigungselement (80) separate Bauteile sind und/oder dass eine Länge (I) des Kanalelements (41) größer als eine Breite (b) des Kanalelements (41) ist.

10. Fahrzeug (10) nach einem der Ansprüche 4 bis 9, **dadurch gekennzeichnet, dass** das Befestigungselement (80) einen zweiten V-förmigen Bereich (81) aufweist und von außen an dem ersten V-förmigen Bereich (43) des Kanalelements (41) anliegt und/oder dass das Befestigungselement (80) entlang des Kanalelements (41) verschiebbar ist.

11. Fahrzeug (10) nach einem der vorhergehenden Ansprüche, **dadurch gekennzeichnet, dass** die Kanalvorrichtung (40) in dem Umlenkbereich (22) mindestens ein Umlenkelement (100) umfasst, das die elektrische Leitung (30) zusammen mit dem Umlenkbereich (22) umschließt und/oder das Kanalelement (41) teilweise überdeckt.

12. Fahrzeug (10) nach Anspruch 11, **dadurch gekennzeichnet, dass** das Umlenkelement (100) mindestens einen Winkel, vorzugsweise zwei 90°-Winkel (a) einschließlich jeweils eines Toleranzbereichs, aufweist und an dem Umlenkbereich (22) befestigt ist.

13. Fahrzeug (10) nach einem der vorhergehenden Ansprüche, **dadurch gekennzeichnet, dass** das Fahrzeug (10) ein Schienenfahrzeug ist.

14. Verfahren zum Ausrüsten eines Fahrzeugs (10) nach einem der Ansprüche 1 bis 13 mit der Kanalvorrichtung (40), **dadurch gekennzeichnet, dass** die elektrische Leitung (30) in mindestens ein Kanalelement (41) eingesetzt wird und anschließend das Kanalelement (41) mittels des mindestens einen Befestigungselements (80) in mindestens einem geradlinigen Bereich (21) an der Unterbodenvorrichtung (20) befestigt wird, wobei die elektrische Leitung (30) zwischen dem Kanalelement (41) und dem geradlinigen Bereich (21) der Unterbodenvorrichtung (20) eingeklemmt wird.

15. Verfahren nach Anspruch 14, **dadurch gekennzeichnet, dass** nach dem Befestigen des Kanalelements (41) das mindestens eine Umlenkelement (100) an dem mindestens einen Umlenkbereich (22) der Unterbodenvorrichtung (20) befestigt wird.

## Claims

1. A vehicle (10) with at least one channel device (40),
- in which a single electrical line (30) is guided, wherein
- the vehicle (10) has an underbody device (20) with at least one rectilinear portion (21) and at least one deflection portion (22), and
- the channel device (40) comprises at least one channel element (41) and at least one fastening element (80), wherein
- the channel element (41) is fastened to the rectilinear portion (21) of the underbody device (20) by means of the fastening element (80),
- the channel element (41) is spaced apart from the rectilinear portion (21) of the underbody device (20), and
**characterized in that**
- the electrical line (30) projects radially out of an opening area (42) of the channel element (41), and
- a clamping effect is exerted on the electrical line (30) by means of the channel element (41) and the fastening element (80).

2. The vehicle (10) according to claim 1, **characterized in that** the channel element (41), together with the rectilinear portion (21) of the underbody device (20), forms a three-point receptacle for the electrical line (30) .

3. The vehicle (10) according to claim 2, **characterized in that** the electrical line (30) contacts the channel element (41) at a first point (71) and at a second point (72), and contacts the rectilinear portion (21) of the underbody device (20) at a third point (73).

4. The vehicle (10) according to one of claims 1 to 3, **characterized in that** the channel element (41) has at least one first V-shaped portion (43).

5. The vehicle (10) according to claim 4, **characterized in that** the channel element (41) has two parallel sections (50, 51) which connect to the first V-shaped portion (43).

6. The vehicle (10) according to claim 5, **characterized in that** the channel element (41) has two inwardly angled sections (52, 53) which connect to the parallel sections (50, 51).

7. The vehicle (10) according to claim 6, **characterized in that** the opening area (42) is narrower than a diameter (D) of the electrical line (30).

8. The vehicle (10) according to one of the preceding claims, **characterized in that** edges (60, 61) along the opening area (42) of channel element (41) each have an edge bead (62, 63) and/or that at least one end (90) of the duct section (41) has at least one edge protection element (91).

9. The vehicle (10) according to one of the preceding claims, **characterized in that** the channel element (41) and the fastening element (80) are separate components and/or that a length (1) of the channel element (41) is greater than a width (b) of the channel element (41)

10. The vehicle (10) according to one of claims 4 to 9, **characterized in that** the fastening element (80) has a second V-shaped portion (81) and contacts the first V-shaped portion (43) of the channel element (41) from the outside and/or that the fastening element (80) is displaceable along the channel element (41).

11. The vehicle (10) according to one of the preceding claims, **characterized in that** the channel device (40) comprises at least one deflection element (100) in the deflection portion (22) which, together with the deflection portion (22), surrounds the electrical line (30) and/or partially covers the channel element (41).

12. The vehicle (10) according to claim 11, **characterized in that** the deflection element (100) has at least one angle, preferably two 90° angles (α), including in each case a tolerance range, and is fastened to the deflection portion (22).

13. The vehicle (10) according to one of the preceding claims, **characterized in that** the vehicle (10) is a rail vehicle.

14. A method for providing a vehicle (10) according to one of claims 1 to 13 with the channel device (40), **characterized in that** the electrical line (30) is inserted into at least one channel element (41) and the channel element (41) is subsequently fastened to the underbody device (20) in at least one rectilinear portion (21) by means of the at least one fastening element (80), wherein the electrical line (30) is clamped between the channel element (41) and the rectilinear portion (21) of the underbody device (20).

15. The method according to claim 14, **characterized in that**, after the fastening of the channel element (41), the at least one deflection element (100) is fastened to the at least one deflection portion (22) of the underbody device (20).

## Revendications

1. Véhicule (10) avec au moins un dispositif de canal (40),
- dans lequel un unique conducteur (30) électrique est guidé, dans lequel
- le véhicule (10) présente un dispositif sous-plancher (20) avec au moins une zone rectiligne (21) et au moins une zone de déviation (22) et
- le dispositif de canal (40) comprend au moins un élément de canal (41) et au moins un élément de fixation (80), dans lequel
- l'élément de canal (41) est fixé au moyen de l'élément de fixation (80) au niveau de la zone rectiligne (21) du dispositif sous-plancher (20),
- l'élément de canal (41) est tenu à distance de la zone rectiligne (21) du dispositif sous-plancher (20), et
**caractérisé en ce que**
- le conducteur (30) électrique dépasse radialement hors d'une zone d'ouverture (42) de l'élément de canal (41), et
- une action de serrage est exercée sur le conducteur (30) électrique au moyen de l'élément de canal (41) et de l'élément de fixation (80).

2. Véhicule (10) selon la revendication 1, **caractérisé en ce que** l'élément de canal (41) réalise conjointement avec la zone rectiligne (21) du dispositif sous-plancher (20) un logement à trois points pour le conducteur (30) électrique.

3. Véhicule (10) selon la revendication 2, **caractérisé en ce que** le conducteur (30) électrique repose au niveau d'un premier emplacement (71) et au niveau d'un deuxième emplacement (72) au niveau de l'élément de canal (41) et repose au niveau d'un troisième emplacement (73) au niveau de la zone rectiligne (21) du dispositif sous-plancher (20).

4. Véhicule (10) selon l'une quelconque des revendications 1 à 3, **caractérisé en ce que** l'élément de canal (41) présente au moins une première zone en forme de V (43).

5. Véhicule (10) selon la revendication 4, **caractérisé en ce que** l'élément de canal (41) présente deux sections (50, 51) parallèles, qui se raccordent à la première zone en forme de V (42).

6. Véhicule (10) selon la revendication 5, **caractérisé en ce que** l'élément de canal (41) présente deux sections inclinées vers l'intérieur (52, 53), qui se raccordent aux sections parallèles (50, 51).

7. Véhicule (10) selon la revendication 6, **caractérisé en ce que** la zone d'ouverture (42) est plus étroite qu'un diamètre (D) du conducteur (30) électrique.

8. Véhicule (10) selon l'une quelconque des revendications précédentes, **caractérisé en ce que** des arêtes (60, 61) présentent respectivement un bord rabattu (62, 63) le long de la zone d'ouverture (42) de l'élément de canal (41), et/ou qu'au moins une extrémité (90) de l'élément de canal (41) présente au moins un élément de protection d'arête (91).

9. Véhicule (10) selon l'une quelconque des revendications précédentes, **caractérisé en ce que** l'élément de canal (41) et l'élément de fixation (80) sont des composants séparés, et/ou qu'une longueur (I) de l'élément de canal (41) est plus grande qu'une largeur (b) de l'élément de canal (41).

10. Véhicule (10) selon l'une quelconque des revendications 4 à 9, **caractérisé en ce que** l'élément de fixation (80) présente une deuxième zone en forme de V (81) et repose depuis l'extérieur au niveau de la première zone en forme de V (43) de l'élément de canal (41), et/ou que l'élément de fixation (80) peut être coulissé le long de l'élément de canal (41).

11. Véhicule (10) selon l'une quelconque des revendications précédentes, **caractérisé en ce que** le dispositif de canal (40) comprend dans la zone de déviation (22) au moins un élément de déviation (100), qui entoure le conducteur (30) électrique conjointement avec la zone de déviation (22) et/ou recouvre au moins en partie l'élément de canal (41).

12. Véhicule (10) selon la revendication 11, **caractérisé en ce que** l'élément de déviation (100) présente au moins un angle, de préférence deux angles de 90° (α) y compris respectivement d'une plage de tolérance, et est fixé au niveau de la zone de déviation (22).

13. Véhicule (10) selon l'une quelconque des revendications précédentes, **caractérisé en ce que** le véhicule (10) est un véhicule sur rails.

14. Procédé servant à équiper un véhicule (10) selon l'une quelconque des revendications 1 à 13 avec le dispositif de canal (40), **caractérisé en ce que** le conducteur (30) électrique est inséré dans au moins un élément de canal (41) puis l'élément de canal (41) est fixé au niveau du dispositif sous-plancher (20) au moyen de l'au moins un élément de fixation (80) dans au moins une zone rectiligne (21), dans lequel le conducteur (30) électrique est coincé entre l'élément de canal (41) et la zone rectiligne (21) du dispositif sous-plancher (20).

15. Procédé selon la revendication 14, **caractérisé en ce qu'**après la fixation de l'élément de canal (41), l'au moins un élément de déviation (100) est fixé au niveau de l'au moins une zone de déviation (22) du dispositif sous-plancher (20).
